# FASCICULE DE BREVET EUROPEEN

(11) **EP 2 570 710 B1**
(45) Date de publication et mention de la délivrance du brevet: **09.03.2016**
(21) Numéro de dépôt: 12184274.4
(22) Date de dépôt: 13.09.2012
(51) Int. Cl.: F16L 33/18, F16L 33/30

(54) **Embout surmoulé de raccordement d'une canalisation à un élément d'un circuit de transport de fluide**
Overmoulded tip for connecting a pipe to a member of a fluid transport circuit
Umgossener Trichter zur Verbindung einer Kanalisation mit einem Element eines Flüssigkeitstransportkreislaufs

(30) Priorité: 15.09.2011 FR 1158238
(43) Date de publication de la demande: 20.03.2013
(73) Titulaire: Parker Hannifin Manufacturing France SAS, 74112 Annemasse (FR)
(72) Inventeur: Gallou, Cédric, 35550 LOHEAC (FR)
(74) Mandataire: Lavialle, Bruno François Stéphane

(56) Documents cités:
- WO-A1-96/07045
- JP-A- 2003 247 684
- US-A1- 2004 020 533

## Description

La présente invention concerne un embout de raccordement d'une canalisation à un élément d'un circuit de transport de fluide. Un tel élément est émetteur ou récepteur de fluide et peut être une autre canalisation, un distributeur, une pompe, un réservoir, un actionneur, un injecteur...

Un embout de raccordement d'une canalisation à un élément de circuit de transport de fluide comprend généralement un corps tubulaire ayant une première portion d'extrémité agencée pour être introduite dans la canalisation et une deuxième portion d'extrémité reliée à des moyens de connexion à l'élément. Ces moyens de connexion peuvent être des moyens de connexion instantanée ou non.

Dans les véhicules automobiles incorporant un moteur à combustion, le carburant est amené jusqu'au moteur au moyen d'un circuit de carburant s'étendant depuis le réservoir de carburant généralement monté à l'arrière du véhicule jusqu'au moteur logé dans un compartiment dédié généralement situé à une extrémité du véhicule, le plus souvent à l'avant de celui-ci. Les embouts les plus répandus dans les circuits de carburant ont un corps en matière plastique et coopèrent avec des canalisations en polyamide. Ce positionnement du moteur et d'une portion du circuit de carburant à une extrémité du véhicule entraîne pour cette portion du circuit de carburant un risque accru de dommages en cas d'accident. Or, cette portion du circuit intègre généralement des embouts de raccordement du circuit à des dérivations et aux organes qu'il alimente. Ces embouts de raccordement sont soumis à des conditions d'utilisation particulièrement sévères en termes de température et de vibrations et risquent de fuir en cas de chocs importants. Or, une telle fuite de carburant peut avoir des conséquences extrêmement graves et conduire notamment à l'embrasement du véhicule.

Pour pouvoir résister à de telles contraintes, les constructeurs automobiles ont recours à des renforts métalliques montés au voisinage des embouts de raccordement pour protéger ceux-ci.

Une autre solution est de recourir à des embouts ayant des corps métalliques, seuls capables de résister aux contraintes engendrées sur les embouts lors d'un accident. Le document US 2004/0020533 A1 divulgue un embout selon le préambule de la revendication 1.

Il est ainsi connu depuis longtemps de réaliser ces corps tubulaires par usinage de barres du métal en question, ce qui autorise des formes compliquées mais à un coût dissuasif de sorte que des procédés alternatifs de fabrication ont été envisagés.

Les procédés de fabrication les plus couramment utilisés désormais sont des procédés de formage et plus particulièrement :
- l'emboutissage profond de feuilles métalliques,
- l'hydroformage de tube de faible épaisseur.

Ces procédés sont économiquement intéressants puisqu'ils nécessitent un relativement faible volume de matière première et autorisent de hautes cadences de production. En outre, les embouts ainsi réalisés sont relativement légers, ce qui est une qualité importante dans le domaine automobile.

Avec ces procédés, il n'est possible de réaliser que des reliefs arrondis sur la première portion d'extrémité afin d'assurer la fixation de l'embout dans la canalisation, ce qui impose l'utilisation de canalisations en élastomère à la place des canalisations en polyamide qui ne pourraient être maintenues en position par les reliefs arrondis. Il est en outre nécessaire avec les canalisations en élastomère de prévoir des colliers de serrage pour maintenir l'embout sur la canalisation. Or, ces canalisations en élastomère sont relativement coûteuses, lourdes et encombrantes, et la mise en place des colliers de serrage augmente la durée de montage des embouts et constitue une source supplémentaire de défauts.

Un but de l'invention est de fournir un moyen pour obvier au moins en partie aux inconvénients précités.

A cet effet, on prévoit, selon l'invention, un embout de raccordement d'une canalisation à un élément de circuit de transport de fluide, comportant un corps métallique tubulaire réalisé par formage ayant une première portion d'extrémité agencée pour être introduite dans la canalisation et une deuxième portion d'extrémité reliée à des moyens de connexion à l'élément, caractérisé en ce qu'au moins un corps en matière plastique est surmoulé sur au moins une partie externe de la première portion d'extrémité du corps métallique et en ce que le corps en matière plastique comporte extérieurement au moins un relief à arête vive pour former un relief d'ancrage de l'embout dans la canalisation.

Ainsi, le corps métallique confère à l'embout sa résistance mécanique et le corps en matière plastique est pourvu d'au moins un relief d'accrochage à angle vif permettant de mordre la paroi d'une canalisation en matière plastique plus rigide que l'élastomère, comme le polyamide. La réalisation du corps en matière plastique par surmoulage se révèle en outre économique.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe longitudinale d'un embout conforme à un premier mode de réalisation de l'invention ;
- la figure 2 est une vue analogue à la figure 1 d'un embout conforme à un deuxième mode de réalisation de l'invention.

En référence aux figures, l'embout de raccordement conforme à l'invention est destiné au raccordement d'une canalisation à un élément de circuit de transport de fluide. L'élément est émetteur ou récepteur de fluide et peut être une autre canalisation, un distributeur, une pompe, un réservoir, un actionneur, un injecteur... et comporte ici un embout mâle destiné à être engagé dans l'embout de raccordement conforme à l'invention.

L'embout de raccordement comprend un corps métallique tubulaire, généralement désigné en 1, ayant une première portion d'extrémité 1.1 agencée pour être introduite dans la canalisation et une deuxième portion d'extrémité 1.2 reliée à des moyens, généralement désignés en 2, de connexion à l'élément. La deuxième portion d'extrémité 1.2 est étagée et comprend un tronçon d'entrée, un tronçon central et un tronçon terminal de diamètres décroissants. Le corps métallique est ici en acier mais peut être dans un autre métal. Ce corps est réalisé par un procédé de formage, ici de préférence, par emboutissage profond d'une feuille métallique ou par hydroformage.

Les moyens de connexion 2 sont agencés pour coopérer avec l'embout mâle de l'élément de circuit et sont logés dans une douille 3 en matière plastique rapportée sur la deuxième portion d'extrémité 1.2 du corps métallique 1. La douille 3 comporte une première section engagée dans le tronçon d'entrée et fixée dans celui-ci par encliquetage, la première section comportant des redans 4 en saillie externe qui sont engagés dans des lumières 5 ménagées en correspondance dans le tronçon d'entrée. La douille 3 comporte un deuxième segment s'étendant en saillie à l'extérieur du tronçon d'entrée qui est pourvu d'un verrou mobile radialement entre une position en saillie dans la douille pour accrocher une collerette externe de l'embout mâle et une position escamotée de libération de l'embout mâle. Le verrou est rappelé élastiquement dans la position en saillie. Le tronçon intermédiaire reçoit des éléments d'étanchéité 6, de forme torique, qui ont un diamètre externe légèrement plus grand que le diamètre interne du tronçon intermédiaire et un diamètre interne légèrement inférieur au diamètre externe de l'embout mâle. Le tronçon terminal a un diamètre interne légèrement supérieur au diamètre externe de l'embout mâle et se termine par un épaulement formant une butée à l'enfoncement de l'embout mâle dans la deuxième portion d'extrémité 1.2 du corps métallique 1. Les moyens de connexion 2 sont par exemple conformes à ceux décrits dans le document EP-A-1427960. On notera que l'extrémité libre de la deuxième portion d'extrémité 1.2 du corps métallique 1 est pourvu d'une collerette 1.4 d'appui de la douille 3 pour avoir une surface d'appui relativement importante limitant le risque de concentration de contraintes dans la zone de contact entre le corps métallique 1 et la douille 3. La collerette 1.4 est obtenue par déformation de l'extrémité libre de la deuxième portion d'extrémité 1.2.

Conformément à l'invention, au moins un corps en matière plastique 7 est surmoulé sur au moins une partie externe de la première portion d'extrémité 1.2 du corps métallique 1. Le corps en matière plastique 5 comporte extérieurement au moins un relief 8 à arête vive pour former un relief d'accrochage de la canalisation.

Le corps en matière plastique 7 comporte ici une pluralité de reliefs 8 qui sont de forme annulaire avec un profil en dent de sapin présentant une arête annulaire vive pour mordre dans la paroi interne de la canalisation.

Le corps en matière plastique 7 est réalisé par surmoulage en injectant la matière plastique à l'état liquide dans un moule dans lequel a été placée la première portion d'extrémité 1.1 du corps métallique 1.

Le corps en matière plastique 7 et la douille 3 sont par exemple en polyamide chargé ou non.

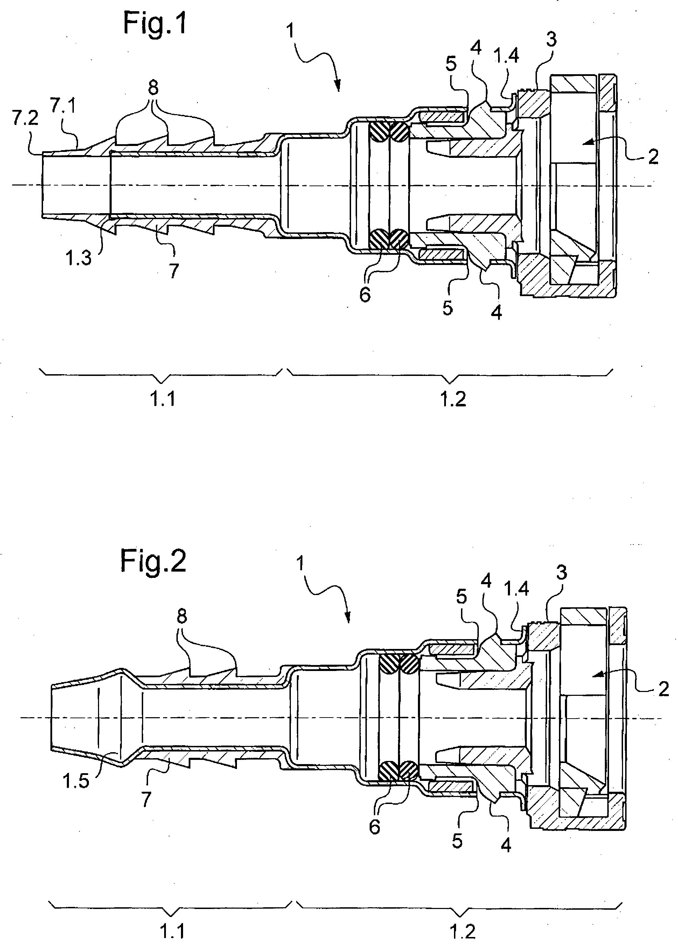

En référence à la figure 1, et selon le premier mode de réalisation, le corps en matière plastique 7 possède une portion d'extrémité 7.1 s'étendant au-delà de la première portion d'extrémité 1.1 du corps métallique 1 dans une direction axiale. La portion d'extrémité 7.1 a une surface externe tronconique ayant une petite section raccordée à un bord terminal 7.2 du corps en matière plastique 7 pour faciliter son introduction dans la canalisation.

Dans ce mode de réalisation, la première portion d'extrémité 1.1 se termine par un collet 1.3 en saillie radiale dans le corps en matière plastique 7. Ceci permet d'éviter d'avoir une ligne de recollement. Dans le procédé de surmoulage, la matière plastique à l'état liquide tend à se répandre dans l'empreinte du moule selon une direction axiale du cors métallique 1 avant de faire le tour du corps métallique 1 en formant le long de celui-ci une ligne de recollement légèrement en creux susceptible d'engendrer un risque de fuite. Le collet 1.3 perturbe l'écoulement axial de la matière plastique en forçant celle-ci à entourer d'abord le corps métallique 1 avant de progresser le long de celui-ci tout en l'enveloppant. Il n'y a donc pas de ligne de recollement. Le collet 1.3 améliore également la résistance de la retenue du corps en matière plastique 7 sur le corps métallique 1.

En référence à la figure 2, et selon le deuxième mode de réalisation, le corps en matière plastique 7 laisse découverte une partie terminale 1.5 de la première portion d'extrémité 1.1 du corps métallique 1. Ladite partie terminale 1.5 comporte un bourrelet externe en contact avec le corps en matière plastique 7 et une surface externe tronconique ayant une grande section se raccordant au bourrelet à l'opposé du corps en matière plastique 7. La surface tronconique facilite l'introduction de la première portion d'extrémité 1.1 dans la canalisation.

Le bourrelet a un diamètre externe tel qu'il est en contact avec la surface intérieure de la canalisation pour exercer une contrainte d'étanchéité. Ceci permet d'éviter un risque de fuite le long du plan de joint qui s'étend ici selon une direction longitudinale du corps en matière plastique 7.

Le bourrelet améliore également la résistance de la retenue du corps en matière plastique 7 sur le corps métallique 1.

Bien entendu, l'invention n'est pas limitée aux modes de réalisation décrits mais englobe toute variante entrant dans le champ de l'invention telle que définie par les revendications.

En particulier, les moyens de connexion peuvent avoir une structure différente de celle décrite et comporter par exemple une rondelle dentée élastiquement déformable éventuellement associée avec un poussoir de déconnexion.

Les moyens de connexion peuvent en outre être logés directement dans le corps métallique.

Le corps métallique peut être réalisé par d'autres procédés de formage ou de déformation plastique que l'hydroformage ou l'emboutissage, comme par exemple le fluotournage ou le roulage.

## Revendications

1. Embout de raccordement d'une canalisation à un élément de circuit de transport de fluide, comportant un corps métallique (1) tubulaire ayant une première portion d'extrémité (1.1) agencée pour être introduite dans la canalisation et une deuxième portion d'extrémité (1.2) reliée à des moyens de connexion (2) à l'élément, au moins un corps en matière plastique (7) étant surmoulé sur au moins une partie externe de la première portion d'extrémité du corps métallique, le corps en matière plastique comportant extérieurement au moins un relief à arête vive (8) pour former un relief d'ancrage de l'embout dans la canalisation, **caractérisé en ce que** le corps métallique (1) est réalisé par formage, ne comprenant que des reliefs arrondis.

2. Dispositif selon la revendication 1, dans lequel le relief (8) est un relief annulaire.

3. Dispositif selon la revendication 2, dans lequel le relief (8) a un profil en dent de sapin.

4. Dispositif selon la revendication 1, dans lequel le corps en matière plastique (7) comporte une pluralité de reliefs (8).

5. Dispositif selon la revendication 1, dans lequel le corps en matière plastique (7) possède une portion d'extrémité (7.1) s'étendant au-delà de la première portion d'extrémité (1.1) du corps métallique (1) dans une direction axiale.

6. Dispositif selon la revendication 5, dans lequel la première portion d'extrémité (1.1) se termine par un collet (1.3) en saillie radiale dans le corps en matière plastique.

7. Dispositif selon la revendication 1, dans lequel le corps en matière plastique (7) laisse découverte une partie terminale (1.5) de la première portion d'extrémité (1.1) du corps métallique (1).

8. Dispositif selon la revendication 7, dans lequel ladite partie terminale (1.5) comporte un bourrelet en contact avec le corps en matière plastique (7).

9. Dispositif selon la revendication 8, dans lequel ladite partie terminale (1.5) comporte une surface externe tronconique ayant une grande section se raccordant au bourrelet à l'opposé du corps en matière plastique (7).

10. Dispositif selon la revendication 1, dans lequel les moyens de connexion (2) sont logés dans une douille (3) rapportée sur la deuxième portion d'extrémité (1.2) du corps métallique (1).

11. Dispositif selon la revendication 10, dans lequel la douille (3) est en matière plastique.

## Patentansprüche

1. Endstück zur Verbindung einer Leitung mit einem Fluidtransportkreislaufelement, umfassend ein rohrförmiges Metallgehäuse (1), das einen ersten Endabschnitt (1.1) hat, der so ausgebildet ist, dass er in die Leitung eingefügt werden kann, sowie einen zweiten Endabschnitt (1.2), der mit Verbindungsmitteln (2) zur Verbindung mit dem Element verbunden ist, wobei auf mindestens einen äußeren Teil des ersten Endabschnittes des Metallgehäuses mindestens ein Kunststoffgehäuse (7) angeformt ist; wobei das Kunststoffgehäuse außen mindestens eine Erhebung (8) mit scharfer Kante umfasst, um eine Erhebung zur Verankerung des Endstücks in der Leitung zu bilden, **dadurch gekennzeichnet, dass** das Metallgehäuse (1) durch Umformung hergestellt wird und nur abgerundete Erhebungen umfasst.

2. Vorrichtung nach Anspruch 1, wobei die Erhebung (8) eine ringförmige Erhebung ist.

3. Vorrichtung nach Anspruch 2, wobei die Erhebung (8) ein Sägezahnprofil hat.

4. Vorrichtung nach Anspruch 1, wobei das Kunststoffgehäuse (7) eine Vielzahl von Erhebungen (8) umfasst.

5. Vorrichtung nach Anspruch 1, wobei das Kunststoffgehäuse (7) einen Endabschnitt (7.1) hat, der sich in axialer Richtung über den ersten Endabschnitt (1.1) des Metallgehäuses (1) hinaus erstreckt.

6. Vorrichtung nach Anspruch 5, wobei der erste Endabschnitt (1.1) über einen radial in das Kunststoffgehäuse vorstehenden Bund (1.3) abschließt.

7. Vorrichtung nach Anspruch 1, wobei das Kunststoffgehäuse (7) einen Endteil (1.5) des ersten Endabschnittes (1.1) des Metallgehäuses (1) frei lässt.

8. Vorrichtung nach Anspruch 7, wobei der genannte Endteil (1.5) einen Wulst in Kontakt mit dem Kunststoffgehäuse (7) umfasst.

9. Vorrichtung nach Anspruch 8, wobei der genannte Endteil (1.5) eine kegelstumpfförmige Außenfläche umfasst, die einen großen Querschnitt hat, der sich an den Wulst entgegengesetzt zum Kunststoffgehäuse (7) anschließt.

10. Vorrichtung nach Anspruch 1, wobei die Verbindungsmittel (2) in einer Hülse (3) untergebracht sind, die an dem zweiten Endabschnitt (1.2) des Metallgehäuses (1) befestigt ist.

11. Vorrichtung nach Anspruch 10, wobei die Hülse (3) aus Kunststoff ist.

## Claims

1. End-fitting for connecting a duct to a component of a fluid-transporting circuit, comprising a tubular metal body (1) having a first end portion (1.1) adapted to be inserted in the duct and a second end portion (1.2) connected to means (2) for connection to the component, at least one body of plastics material (7) being moulded over at least an outer part of the first end portion of the metal body, the body of plastics material comprising on the outside at least one sharp-edged relief (8) to form a relief for anchoring the end-fitting in the duct, **characterised in that** the metal body (1) is produced by forming, comprising only rounded reliefs.

2. Device according to claim 1, wherein the relief (8) is an annular relief.

3. Device according to claim 2, wherein the outline of the relief (8) is fir-tree like.

4. Device according to claim 1, wherein the body of plastics material (7) comprises a plurality of reliefs (8).

5. Device according to claim 1, wherein the body of plastics material (7) has an end portion (7.1) which extends beyond the first end portion (1.1) of the metal body (1) in an axial direction.

6. Device according to claim 5, wherein the first end portion (1.1) terminates in a collar (1.3) which projects radially into the body of plastics material.

7. Device according to claim 1, wherein the body of plastics material (7) leaves uncovered a terminal part (1.5) of the first end portion (1.1) of the metal body (1).

8. Device according to claim 7, wherein said terminal part (1.5) comprises an enlargement in contact with the body of plastics material (7).

9. Device according to claim 8, wherein said terminal part (1.5) comprises a frusto-conical outer surface having a portion of large cross-section which connects up with the enlargement on the opposite side from the body of plastics material (7).

10. Device according to claim 1, wherein the means (2) for connection are housed in a sleeve (3) which is mounted on the second end portion (1.2) of the metal body (1).

11. Device according to claim 10, wherein the sleeve (3) is made of plastics material.
